# EUROPÄISCHE PATENTSCHRIFT

(11) **EP 1 305 533 B1**
(45) Veröffentlichungstag und Bekanntmachung des Hinweises auf die Patenterteilung: **18.08.2004**
(21) Anmeldenummer: 01956403.8
(22) Anmeldetag: 27.07.2001
(51) Int. Cl.: F16C 29/02, B23Q 1/26

(54) **LOSLAGER**
FLOATING BEARING
PALIER LIBRE

(30) Priorität: 03.08.2000 DE 20013363 U
(43) Veröffentlichungstag der Anmeldung: 02.05.2003
(73) Patentinhaber: IGUS SPRITZGUSSTEILE FÜR DIE INDUSTRIE GmbH, D-51147 Köln (DE)
(72) Erfinder: MOSHAMMER, Horst, 53545 Linz am Rhein (DE)
(74) Vertreter: Stachow, Ernst-Walther, Prof. Dr.
(86) Internationale Anmeldenummer: PCT/DE2001/002862
(87) Internationale Veröffentlichungsnummer: WO 2002/012741

(56) Entgegenhaltungen:
- DE-A- 1 575 613
- DE-C- 19 805 974
- FR-A- 2 534 521
- US-A- 4 637 738
- US-A- 5 388 913

## Beschreibung

Die Erfindung betrifft ein Loslager für einen durch zwei Wellen geführten Schlitten, mit einem auf einer der Wellen geführten Linearlager und einem das Linearlager aufnehmenden Lagergehäuse, das mit dem Schlitten durch eine Verbindungseinrichtung verbunden ist.

Da der Schlitten durch mindestens ein Lager auf der einen Welle und durch mindestens ein Lager auf der anderen Welle geführt ist, ist zweckmäßigerweise das einer der Wellen zugeordnete Lager als Loslager, das Parallelitätsfehler der.beiden Wellen ausgleichen kann, ausgebildet.

Ein Loslager der eingangs genannten Art ist aus der US 5 388 913 A bekannt. Die Verbindungseinrichtung dieses Loslagers mit dem Schlitten umfasst einen Lagerblock für ein sphärisches Lager, der auf dem Lagergehäuse des Linearlagers an der von der Welle abgewandten Seite befestigt ist. Weiterhin schließt die Verbindungseinrichtung eine Halteplatte mit gabelförmigen Vorsprüngen ein, zwischen denen ein Bolzen befestigt ist. Der Bolzen erstreckt sich durch das sphärische Lager, sodass dieses mit dem Lagerblock und dem daran befestigten Lagergehäuse für das Linearlager quer zur Längsrichtung der Welle bewegbar ist.

Bei dem aus der DE 19805974 C offenbarten Loslager ist das Lagergehäuse- über eine gabelförmige Kupplung mit dem Schlitten verbunden. Auf der Oberseite des Lagergehäuses ist eine Kugel in eine Bohrung eingelegt, die auf der das Loslager führenden Welle läuft. Auf der Unterseite ist das Lagergehäuse soweit ausgefräst, dass die Welle frei liegt. Der Schlitten weist in dem oberen Gabelteil eine Prismennut auf, in der die Kugel läuft. Das untere Gabelteil wird durch eine Blattfeder gebildet, die federnd an der Welle anliegt und das obere Gabeiteil auf die Kugel drückt.

Das aus der FR 2534521 A bekannte Loslager umfasst ein Lagergehäuse, das innerhalb einer Öffnung in der Verbindungseinrichtung zwischen dem Lagergehäuse und dem Schlitten quer zur Längsrichtung der Welle und in der Wellenebene verschiebbar angeordnet ist. Dabei gleiten die zur Wellenebene parallelen Seitenflächen des Lagergehäuses an entsprechenden Flächen der Öffnung.

Der vorliegenden Erfindung liegt die Aufgabe zugrunde, ein Loslager der eingangs genannten Art so weiter zu bilden, dass das Lager eine hohe Lebensdauer, eine exakte Führung des Schlittens parallel zu der durch die beiden Wellen definierte Ebene sowie einen relativ geringen Herstellungsaufwand mit damit verbundenen geringen Herstellungskosten und einen kompakten Aufbau erlaubt.

Erfindungsgemäß wird die Aufgabe dadurch gelöst, dass das Lagergehäuse zwei quer zur Längsrichtung der betreffenden Welle und in der durch die Achsen der Wellen definierten Wellenebene seitlich vorstehende Zapfen aufweist, die in seitlich des Lagergehäuses angeordneten Führungen der Verbindungseinrichtung axial verschiebbar angeordnet sind, sodass das Lagergehäuse quer zur Längsrichtung der betreffenden Welle bewegbar ist.

Aufgrund der seitlichen Anordnung der Verbindungseinrichtung zum Lagergehäuse kann ein äußerst kompakter Aufbau des Loslagers erreicht werden. Durch die seitlich am Lagergehäuse ausgebildeten Zapfen und korrespondierenden Führungen der Verbindungseinrichtung können der Herstellungsaufwand und die Herstellungskosten erheblich reduziert werden.

Als Linearlager für das erfindungsgemäße Loslager kommen alle üblichen Linearlagerarten, insbesondere Gleit- oder Kugellager, in Betracht. Mit dem erfindungsgemäßen Loslager kann an alle Normgrößen für Linearlager angeschlossen werden.

Um Parallelitätsfehler nicht nur in der Wellenebene, sondern auch senkrecht dazu ausgleichen zu können, ist in einer bevorzugten Ausführung der Erfindung die Verbindungseinrichtung so ausgebildet, dass das Lagergehäuse um die quer zur Längsrichtung der betreffenden Welle und in der Wellenebene liegende Achse verschwenkbar angeordnet ist.

Zur zusätzlichen schwenkbaren Lagerung des Lagergehäuses in den Führungen der Verbindungseinrichtung sind die Zapfen zweckmäßigerweise zylinderförmig ausgebildet und verschwenkbar in den Führungen gelagert.

Die Verbindungseinrichtung kann eine Befestigungsplatte zur Befestigung an einer Grundplatte des Schlittens aufweisen, wobei die Führungen zur Lagerung des Lagergehäuses an der Befestigungsplatte angeordnet sind. Die Befestigungsplatte kann zum Beispiel mit Hilfe von Schrauben an der Grundplatte des Schlittens montiert werden.

Die Führungen können jedoch auch unmittelbar an der Grundplatte des Schlittens angeordnet sein, so dass die Verbindungseinrichtung lediglich die Führungen und die Linear- und gegebenenfalls Schwenklagerung des Lagergehäuses umfasst.

Das Linearlager des erfindungsgemäßen Loslagers kann insbesondere als Kunststoffgleitlager ausgebildet sein. Es kann dabei auf die den Normgrößen entsprechenden im Handel erhältlichen Gleitlager zurückgegriffen werden.

Das Lagergehäuse des erfindungsgemäßen Loslagers kann einen im Wesentlichen zylinderförmigen, geschlossenen Raum zur Aufnahme eines im Wesentlichen zylinderförmigen Linearlagers aufweisen. Eine derartige Ausbildung kommt in Betracht, wenn die beiden Wellen an ihren Enden, jedenfalls nicht im Bewegungsbereich des Schlittens, von Trägern gehalten werden.

Erstrecken sich die Träger an einer Seite der Wellen.über den Bewegungsbereich des Schlittens, so weist das Lagergehäuse einen im Wesentlichen zylinderförmigen Raum mit einem Längsschlitz zur Aufnahme eines im Wesentlichen zylinderförmigen Linearlagers mit ebenfalls einem Längsschlitz auf. Dabei dienen die Längsschlitze zur Aufnahme des Bereichs, mit dem der Träger mit betreffenden Welle verbunden ist.

Die Erfindung betrifft des Weiteren einen Schlitten, der durch eine erste und eine zweite Welle geführt und der mindestens ein der ersten Welle zugeordnetes Lager und mindestens ein der zweiten Welle zugeordnetes Loslager aufweist. Das Loslager ist gemäß der vorliegenden Erfindung ausgebildet.

In einer bevorzugten Ausführung des Schlittens sind zwei der ersten Welle zugeordnete Lager mit relativ zum Schlitten unbeweglichen Lagergehäusen und ein der zweiten Welle zugeordnetes Loslager gemäß der Erfindung vorgesehen, das etwa in halber Höhe des Abstands zwischen den beiden festen Lagern angeordnet ist.

Unter Umständen können auch mehrere der zweiten Welle zugeordnete Loslager gemäß der Erfindung am Schlitten verwendet werden.

Einige Ausführungsbeispiele der Erfindung werden im Folgenden anhand der Zeichnung näher beschrieben. In der Zeichnung zeigen:
- Fig. 1a: eine teilweise aufgeschnittene Front-Ansicht eines ersten Ausführungsbeispiels,
- Fig. 1b: eine Seitenansicht des Lagers in Richtung des Pfeils B in Fig. 1a,
- Fig. 1c: eine Draufsicht in Richtung des Pfeils C in Fig. 1a,
- Fig. 2a: eine teilweise aufgeschnittene Front-Ansicht eines zweiten Ausführungsbeispiels,
- Fig. 2b: eine Seitenansicht des Lagers in Richtung des Pfeils B in Fig. 2a,
- Fig. 2c: eine Draufsicht in Richtung des Pfeils C in Fig. 2a,
- Fig. 3a: eine Frontansicht eines auf zwei Wellen geführten Schlittens mit einem Loslager gemäß Figuren 2a-c,
- Fig. 3b: Seitenansicht des Schlittens in Richtung des Pfeils B in Fig. 3a und
- Fig. 3c: Seitenansicht des Schlittens in Richtung des Pfeils C in Fig. 3a.

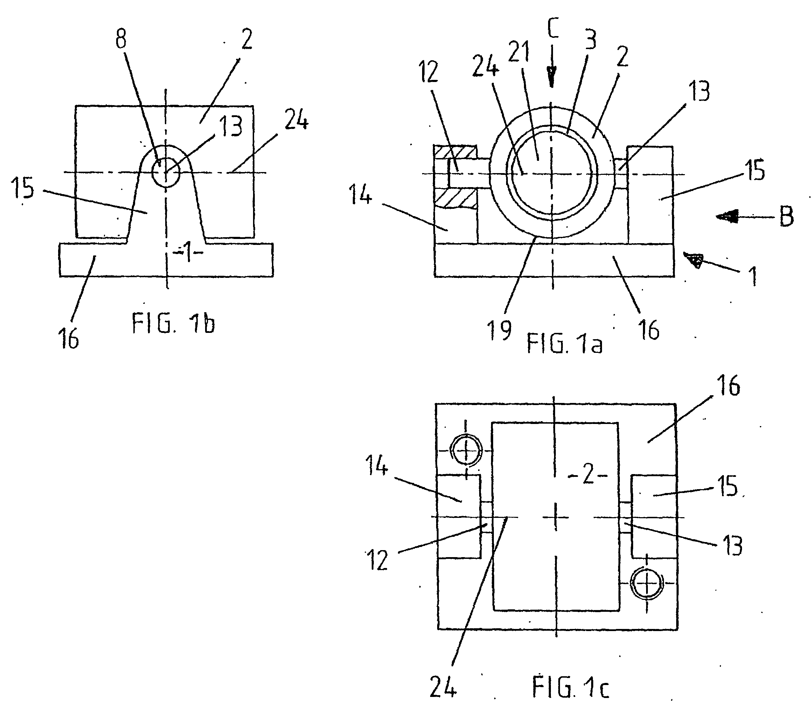

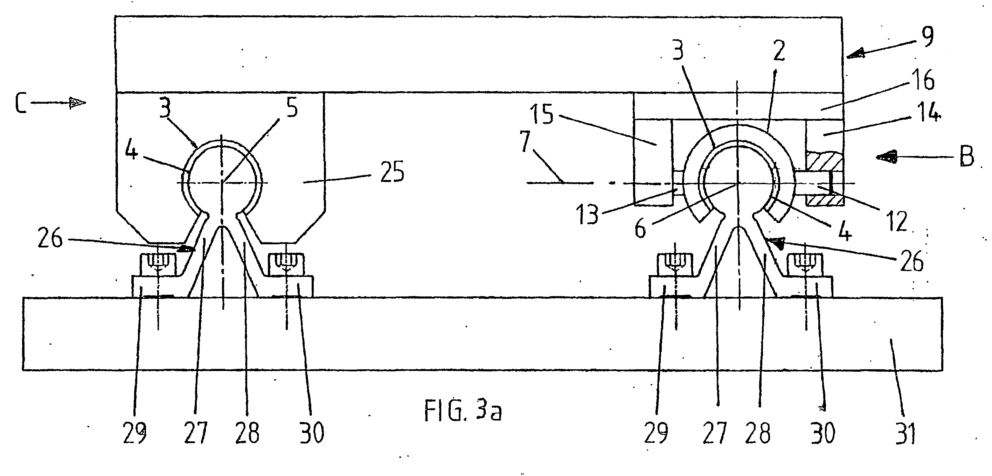

Wie aus den Figuren 1b-2c der beiden beschriebenen Ausführungsbeispiele hervorgeht, weist das Loslager ein mit dem Schlitten (vgl. Figuren 3a-3c) durch eine Verbindungseinrichtung 1 verbundenes Lagergehäuse 2 auf, das ein Linearlager 3 aufnimmt.

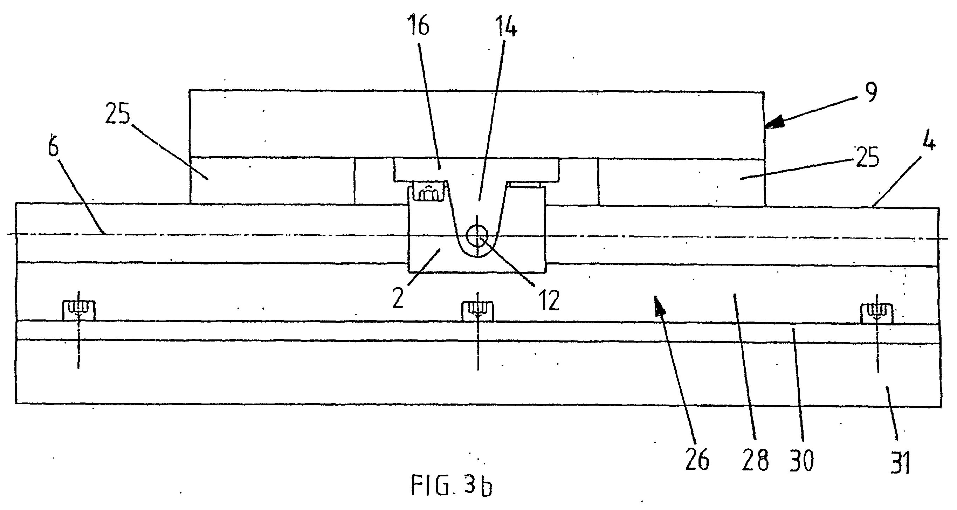

Wie im Folgenden näher beschrieben wird, ist die Verbindungseinrichtung 1 derart ausgebildet, dass das Lagergehäuse 2 quer zur Längsrichtung der betreffenden Welle (vgl. Bezugszeichen 4 in Fig. 3b) und parallel zu der durch die Achsen (vgl. Bezugszeichen 5 und 6 in Figuren 3a-3c) der Wellen 4 definierten Wellenebene (vgl. Bezugszeichen 7 in Fig. 3a) bewegbar angeordnet ist.

Die Verbindungseinrichtung 1 ist weiterhin so ausgebildet, dass das Lagergehäuse 2 um eine quer zur Längsrichtung der Wellen 4 und parallel zur Wellenebene 7 verlaufende Achse 8 verschwenkbar angeordnet ist.

Die Verbindungseinrichtung 1 umfasst eine Befestigungsplatte 16, an der die Führungen 14 und 15 an beiden Seiten des Lagergehäuses 2 einstückig angeformt sind. Bei dem in den Figuren 1a-1c dargestellten Ausführungsbeispiel weist das Lagergehäuse 2 zur verschiebbaren und verschwenkbaren Lagerung in den Führungen 14 und 15 zwei seitlich angeordnete, zylinderförmige Zapfen 12 und 13 auf, Die Zapfen 12 und 13 sind quer zur Längsrichtung des Lagergehäuses 2 und parallel-zur Befestigungsplatte 16 verlaufenden Mittelachse 24 des Lagergehäuses 2 angeordnet.

Die seitlich am Lagergehäuse 2 an der Befestigungsplatte 16 angeformten Führungen 14 und 15 weisen entsprechende Öffnungen auf, in denen die Zapfen 12 des Lagergehäuses 2 längs der Mittelachse 24 verschiebbar und um diese Achse verschwenkbar angeordnet sind.

Das Lagergehäuse 2 wird von den Führungen 14 und 15 so gehaltert, dass die Unterseite 19 des Lagergehäuses 2 im Abstand von der Bodenplatte 16 angeordnet ist, wenn das Lagergehäuse 2 parallel zur Bodenplatte 16 ausgerichtet ist. Aufgrund dieses Abstands, der relativ klein gehalten werden kann, ist der Verschwenkwinkel des Lägergehäuses 2 bezüglich der Bodenplatte 16 begrenzt.

Bei dem in den Figuren 1a-1c dargestellten Ausführungsbeispiel weist das Lagergehäuse 2 einen zylinderförmigen geschlossenen Raum 21 zur Aufnahme eines ebenfalls zylinderförmigen Linearlagers 3 auf. Dieses Lager eignet sich daher für Wellen, die außerhalb des Bewegungsbereichs des Schlittens durch einen Träger gehalten werden.

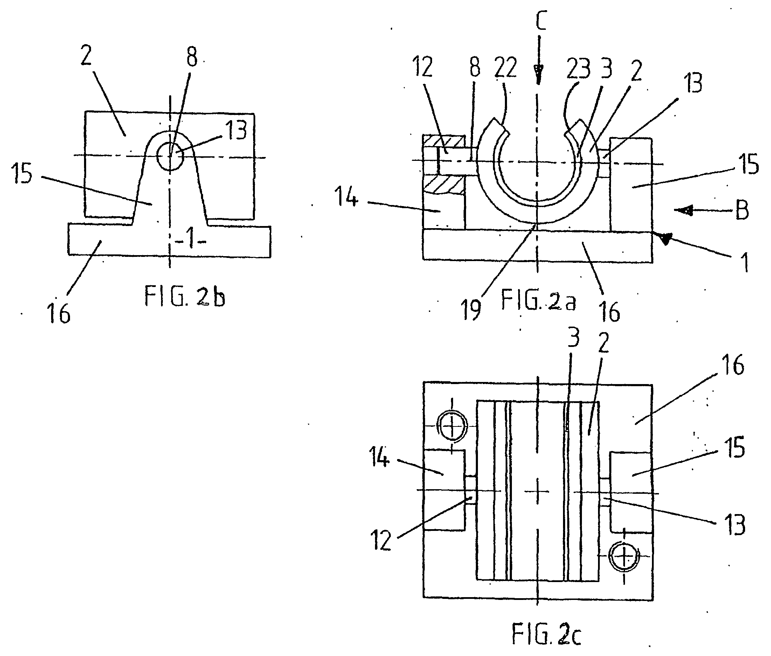

Die Figuren 2a-2c zeigen ein drittes Ausführungsbeispiel, das sich von dem in den Figuren 1a-1c dargestellten Ausführungsbeispiel nur dadurch unterscheidet, dass das Lagergehäuse 2 an der der Bodenplatte 16 gegenüberliegenden Seite einen Längsschlitz 22 aufweist. Das in dem Lagergehäuse 2 angeordnete Linearlager 3 ist mit einem entsprechenden Längsschlitz 23 versehen. Ein solches Lager eignet sich für Wellen, die von einem sich in Längsrichtung unterhalb der Welle erstreckenden Träger gehalten werden, wie dies in Figur 3a gezeigt ist.

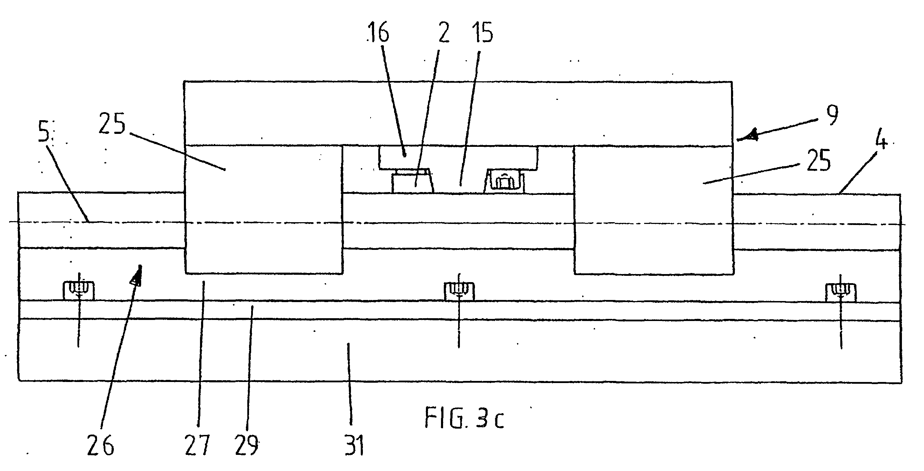

In den Figuren 3a-3c ist eine Anordnung, bestehend aus zwei im Wesentlichen parallelen Wellen 4 und einem darauf geführten Schlitten 9, dargestellt. Der in Fig. 3a links gezeigten Welle 4 sind, wie insbesondere aus der Seitenansicht in Fig. 3c hervorgeht, zwei fest mit dem Schlitten 9 verbundene Lager zugeordnet, die aus einem blockförmigen Lagergehäuse 25 und einem Linearlager 3 bestehen.

Der in Fig. 3a rechts gezeigten Welle 4 ist ein Loslager gemäß dem in den Figuren 2a-2c gezeigten Ausführungsbeispiel zugeordnet. Dieses Loslager ist, wie aus den Figuren 3b und 3c hervorgeht, etwa in halber Höhe des Abstands zwischen den beiden festen Lagergehäusen 25 angeordnet.

Es ist somit in der Lage, Parallelitätsfehler sowohl in der Wellenebene 7 (vgl. Fig. 3a) als auch senkrecht zur Wellenebene 7 bei Bewegung des Schlittens 9 auszugleichen.

Wie insbesondere Fig. 3a zeigt, weisen die Wellen 4 an ihrer Unterseite angeformte, sich über ihre Länge erstreckende Träger 26 auf, so dass die Lagergehäuse 2 und 25 sowie die darin angeordneten Linearlager 3 mit Längsschlitzen versehen sind.

Die Träger 26 sind durch zwei Schenkel 27 und 28 in Form eines umgekehrten V gebildet, an deren Enden in einer Ebene liegende Flansche 29 bzw. 30 zur Schraubbefestigung der Träger 26 auf einer Basis 31 angeordnet sind.

### Bezugszeichenliste

- 1: Verbindungseinrichtung
- 2: Lagergehäuse
- 3: Linearlager
- 4: Welle
- 5: Achse
- 6: Achse
- 7: Wellenebene
- 8: Achse
- 9: Schlitten
- 10: Welle
- 12: Zapfen
- 13: Zapfen
- 14: Führung
- 15: Führung
- 16: Befestigungsplatte
- 19: Bodenseite
- 21: zylinderförmiger Raum
- 22: Längsschlitz
- 23: Längsschlitz
- 24: Mittelachse
- 25: Lagergehäuse
- 26: Träger
- 27: Schenkel
- 28: Schenkel
- 29: Flansch
- 30: Flansch
- 31: Basis

## Patentansprüche

1. Loslager für einen durch zwei Wellen (4) geführten Schlitten (9), mit einem auf einer der Wellen (4) geführten Linearlager (3) und einem das Linearlager (3) aufnehmenden Lagergehäuse (2), das mit dem Schlitten (9) durch eine Verbindungseinrichtung (1) verbunden ist, **dadurch gekennzeichnet, dass** das Lagergehäuse (2) zwei quer zur Längsrichtung der betreffenden Welle (4) und in der durch die Achsen (5,6) der Wellen (4) definierten Wellenebene (7) seitlich vorstehende Zapfen (12, 13) aufweist, die in seitlich des Lagergehäuses (2) angeordneten Führungen (14, 15) der Verbindungseinrichtung (1) axial verschiebbar angeordnet sind, so dass das Lagergehäuse (2) quer zur Längsrichtung der betreffenden Welle (4) bewegbar ist.

2. Loslager nach Anspruch 1, **dadurch gekennzeichnet, dass** die Verbindungseinrichtung (1) so ausgebildet ist, dass das Lagergehäuse (2) um die quer zur Längsrichtung der betreffenden Welle (4) und in der Wellenebene (7) liegenden Achse (8) verschwenkbar angeordnet ist.

3. Loslager nach Anspruch 1 oder 2, **dadurch gekennzeichnet, dass** die Zapfen (12, 13) zylinderförmig ausgebildet sind und um die Zylinderachse verschwenkbar in den Führungen (14, 15) gelagert sind.

4. Loslager nach einem der Ansprüche 1 bis 3, **dadurch gekennzeichnet, dass** die Verbindungseinrichtung (1) eine Befestigungsplatte (16) zur Befestigung an einer Grundplatte des Schlittens (9) aufweist, an der die Führungen (14, 15) zur Lagerung des Lagergehäuses (2) angeordnet sind.

5. Loslager nach einem der Ansprüche 1 bis 4, **dadurch gekennzeichnet, dass** das Linearlager (3) als Kunststoffgleitlager ausgebildet ist.

6. Loslager nach einem der Ansprüche 1 bis 5, **dadurch gekennzeichnet, dass** das Lagergehäuse (3) einen im Wesentlichen zylinderförmigen, geschlossenen Raum (21) zur Aufnahme eines im Wesentlichen zylinderförmigen Linearlagers (3) aufweist.

7. Loslager nach einem der Ansprüche 1 bis 5, **dadurch gekennzeichnet, dass** das Lagergehäuse (2) einen im Wesentlichen zylinderförmigen Raum (21) mit einem Längsschlitz (22) zur Aufnahme eines im Wesentlichen zylinderförmigen Linearlagers (3) mit ebenfalls einem Längsschlitz (23) aufweist, wobei die Längsschlitze (22, 23) zur Aufnahme eines' Trägers (26) für die betreffende Welle (4) ausgelegt sind.

8. Schlitten, der von einer ersten und einer zweiten Welle (4) führbar ist und mindestens ein der ersten Welle (4) zugeordnetes Lager und mindestens ein der zweiten Welle (4) zugeordnetes Loslager nach einem der Ansprüche 1-7 aufweist.

9. Schlitten nach Anspruch 8, **dadurch gekennzeichnet, dass** zwei der ersten Welle (4) zugeordnete Lager mit relativ zum Schlitten (9) unbeweglichen Lagergehäusen (25) und ein der zweiten Welle (4) zugeordnetes Loslager nach einem der Ansprüche 1-7 vorgesehen sind, das etwa in halber Höhe des Abstands zwischen den beiden festen Lagern angeordnet ist.

## Claims

1. Movable bearing for a slide (9) guided on two shafts (4), with a linear bearing (3) guided on one of the shafts (4) and a bearing housing (2) that accommodates the linear bearing (3) and is connected to the slide (9) by a connector (1), **characterised in that** the bearing housing (2) comprises two laterally projecting pins (12, 13) lying transverse to the longitudinal direction of the respective shaft (4) and within to the shaft plane (7) defined by the axes (5, 6) of the shafts (4), which are arranged in axially sliding fashion in guides (14, 15) of the connector (1) located on the slide of the bearing housing (2), so that the bearing housing (2) is movable transverse to the longitudinal direction of the respective shaft (4).

2. Movable bearing as per Claim 1, **characterised in that** the connector (1) is designed such that the bearing housing (2) is mounted in pivoting fashion about an axis (8) running transverse to the longitudinal direction of the shafts (4) and within the shaft plane (7).

3. Movable bearing as per Claim 1 or 2, **characterised in that** the pins (12, 13) are of cylindrical design and mounted in the guides (14, 15) in pivoting fashion around the cylinder axis.

4. Movable bearing as per one of Claims 1 to 3, **characterised in that** the connector (1) has a mounting plate (16) for mounting on a base plate of the slide (9), which bears the guides (14, 15) for mounting the bearing housing (2).

5. Movable bearing as per one of Claims 1 to 4, **characterised in that** the linear bearing (3) is designed as a plastic sliding bearing.

6. Movable bearing as per one of Claims 1 to 5, **characterised in that** the bearing housing (2) has an essentially cylindrical, closed space (21) for receiving an essentially cylindrical linear bearing (3).

7. Movable bearing as per one of Claims 1 to 5, **characterised in that** the bearing housing (2) has an essentially cylindrical space (21) with a longitudinal slit (22) for receiving an essentially cylindrical linear bearing (3) that likewise has a longitudinal slit (23), where the longitudinal slits (22, 23) are designed to receive a support (26) for the respective shaft (4).

8. Slide which is guided by a first and second shaft (4) and has at least one bearing associated with the first shaft (4) and at least one movable bearing according to one of Claims 1 to 7 associated with the second shaft (4).

9. Slide as per Claim 8, **characterised in that** there are two bearings associated with the first shaft (4), which have bearing housings (25) that are stationary relative to the slide (9), and one movable bearing according to one of Claims 1 to 7 associated with the second shaft (4), which is located at roughly half the distance between the two fixed bearings.

## Revendications

1. Palier flottant pour un chariot (9) guidé au moyen de deux arbres (4), comprenant un palier linéaire (3) guidé sur l'un des arbres (4) et un boîtier de palier (2) qui reçoit le palier linéaire (3) et qui est relié au chariot (9) via un dispositif de liaison (1), **caractérisé en ce que** le boîtier de palier (2) comprend deux tenons (12, 13) qui dépassent latéralement perpendiculairement à la direction longitudinale de l'arbre concerné (4) et dans le plan (7) défini par les axes (5, 6) des arbres (4), lesdits tenons étant agencés avec faculté de translation axiale dans des guidages (14, 15), agencés latéralement sur le boîtier de palier (2), du dispositif de liaison (1) de telle manière que le boîtier de palier (2) est déplaçable perpendiculairement à la direction longitudinale de l'arbre concerné (4).

2. Palier flottant selon la revendication 1, **caractérisé en ce que** le dispositif de liaison (1) est ainsi réalisé que le boîtier de palier (2) est agencé avec faculté de pivotement autour d'un axe (8) disposé perpendiculairement à la direction longitudinale de l'arbre concerné (4) et dans le plan (7) des axes des arbres.

3. Palier flottant selon l'une ou l'autre des revendications 1 et 2, **caractérisé en ce que** les tenons (12, 13) sont réalisés sous forme cylindrique et sont montés dans les guidages (14, 15) avec faculté de pivotement autour de l'axe du cylindre.

4. Palier flottant selon l'une des revendications 1 à 3, **caractérisé en ce que** le dispositif de liaison (1) comprend une plaque de fixation (16) pour la fixation sur une plaque de base du chariot (9), sur laquelle sont agencés les guidages (14, 15) pour le montage du boîtier de palier (2).

5. Palier flottant selon l'une des revendications 1 à 4, **caractérisé en ce que** le palier linéaire (3) est réalisé sous forme de palier coulissant en matière plastique.

6. Palier flottant selon l'une des revendications 1 à 5, **caractérisé en ce que** le boîtier de palier (2) comprend une chambre fermée (21) sensiblement cylindrique pour loger un palier linéaire (3) de forme de sensiblement cylindrique.

7. Palier flottant selon l'une des revendications 1 à 5, **caractérisé en ce que** le boîtier de palier (2) comprend une chambre (21) sensiblement cylindrique avec une fente longitudinale (22) pour loger un palier linéaire (3) de forme sensiblement cylindrique comportant également une fente longitudinale (23), les fentes longitudinales (22, 23) étant conçues pour recevoir un support (26) pour l'arbre concerné (4).

8. Chariot, susceptible d'être guidé par un premier arbre et par un second arbre (4), qui comprend au moins un palier associé au premier arbre (4) et au moins un palier flottant,selon l'une des revendications 1 à 7, associé au second arbre (4).

9. Chariot selon la revendication 8, **caractérisé en ce qu'**il est prévu deux paliers associés au premier arbre (4), avec des boîtiers de palier (25) immobiles par rapport au chariot (9), et un palier flottant selon l'une des revendications 1 à 7, associé au second arbre (4), lequel est agencé approximativement vers la moitié de la distance entre les deux paliers fixes.
